# EUROPEAN PATENT APPLICATION

(11) **EP 4 197 328 A1**
(43) Date of publication of application: **21.06.2023**
(21) Application number: 21306801.8
(22) Date of filing: 16.12.2021
(51) Int. Cl.: A01N 25/04, A01P 3/00, A01N 55/02

(54) **NEW DISPERSIONS, THEIR PROCESS OF PREPARATION AND THEIR USE AS PHYTOPHARMACEUTICAL AGENTS**

(71) Applicant: Université de Haute Alsace, 68200 Mulhouse (FR)
(72) Inventor: DELAITE, Christelle, 68720 Hochstatt (FR); MERLEN, Loriane, 68000 COLMAR (FR); GELLON, Mélanie, 68250 PFAFFENHEIM (FR); TARNUS, Céline, 68170 Rixheim (FR)
(74) Representative: Gevers & Orès

(57) **Abstract**

The present invention deals with new dispersions, their process of preparation and their use as phytopharmaceutical agents. In particular, the invention concerns a dispersion of bismuth subsalicylate or one of its derivatives, a process of preparation of said dispersion, a phytopharmaceutical composition comprising said dispersion, and uses of said dispersion or said phytopharmaceutical composition to treat or prevent a fungal disease of a plant, in particular by plant endotherapy.

## Description

The present invention deals with new dispersions, their process of preparation and their use as phytopharmaceutical agents. In particular, the invention concerns a dispersion of bismuth subsalicylate or one of its derivatives, a process of preparation of said dispersion, a phytopharmaceutical composition comprising said dispersion, and uses of said dispersion or said phytopharmaceutical composition to treat or prevent a fungal disease of a plant, in particular by plant endotherapy.

The control and prevention of cryptogamic (or fungal) diseases is a major issue in agriculture, particularly in the wine and fruit growing sectors. There are different types of cryptogamic diseases such as mildew, powdery mildew, grey rot, and wood diseases which include esca, Botrysphaeria dieback (i.e. Botryosphaeria decline diseases such as Black Dead Arm), eutypiosis, anthracnose, or excoriosis.

The wood diseases are particularly damaging for the sustainability of the wine heritage. The parasites responsible for these diseases cause the death of the vine stock in the more or less long term and can require the renewal of plants which can reach more than 10% of a vineyard.

For about ten years, there has been a worrying progression of these diseases which have become a major concern for the wine industry. Indeed, the vineyard is affected worldwide. In France, all the wine-producing regions are affected and currently about 13% of the French vineyard is unproductive, mainly because of these diseases of decline. Several observations suggest that the epidemic is only at the beginning of its cycle: i) the banning of sodium arsenite, the only known effective means to fight esca and Black Dead Arm (BDA), from 2001 onwards, ii) the annual increase in the mortality rate of 4 to 5% from the fifth year following the cessation of treatment with sodium arsenite and iii) the high rate of asymptomatic infected vines in the vineyard.

Indeed, the development of this epidemic has been favored by the banning of sodium arsenite in 2001, in all wine-producing countries, because of its toxicity. This ban is all the more worrying for wine growers as no alternative, effective and viable method has been proposed to date. This jeopardizes the maintenance of the production tool and its longevity on a worldwide scale. Consequently, the effects of these wood diseases will be numerous in the medium term: they will lead either to a depreciation of the quality of the wines following a rejuvenation of the plots, or to a loss of the typicity of a wine of a wine-producing region following the non-replanting of the most sensitive grape varieties.

The wood diseases affecting the vineyard include eutypiosis, esca, and certain Botrysphaeria diseases such as Black Dead Arm (BDA). These diseases are associated with the presence of different fungi capable of degrading woody tissues. The main species isolated associated with these diseases are *Phaeomoniella chlamydospora, Phaeoacremonium aleophilum, Eutypa lata, Fomitiporia mediterranea, Stereum hirsutum, Diplodia seriata, Neofusicoccum parvum* and *Botryosphaeria stevensii.* Other species are being identified.

These diseases are expressed at the wood level by the formation of sectorial and/or central necroses, by the presence of brown bands or cankers in the trunk and arms and at the leaf level by discoloration and desiccation which can be devastating.

Wood diseases can also cause stunted branches and fruit symptoms such as delayed ripening, wilting or black-purple spots on the fruit surface. Eutypiosis, whose main pathogen is E. *lata,* affects not only vineyards but also fruit trees such as plum, pear, apple, apricot, cherry and some forest trees.

Since the banning of sodium arsenite due to its high toxicity, research has been undertaken in several countries in order to identify alternative solutions to its use. The combined use of cyproconazole and carbendazim to prevent *Eutypa lata* infections has been proposed. This combination, marketed under the name Atemicep^{®} in France, has been withdrawn from the market because of its phytotoxicity. Another phytosanitary product combining flusilazole and carbendazim and registered for esca was also withdrawn from the market due to its toxicity in 2007.

Research is now focused on finding alternatives to the use of chemical agents. For example, the biofungicide ESQUIVE^{®}WP, marketed by Agrauxine, has been registered against esca, Black Dead Arm and eutypiosis of grapevines. This phytopharmaceutical product is based on the use of a fungus, namely *Trichoderma atroviride* strain I1237. This fungus has an antagonistic and hyperparasitism activity that would prevent the development of the main phytopathogens involved in these diseases. This biofungicide should be applied at the time of pruning, only as a prophylactic, by drenching or spraying. As the efficacy of ESQUIVE^{®} WP is partial and the field demonstration is not fully established, it is recommended to accompany its use with prophylactic cultural measures.

New practices have also been developed to avoid the spread of wood diseases during nursery production. Some nurserymen treat propagation material with hot water or in baths of benomyl, captan or didecylmethylammonium chloride. These treatments are said to reduce the incidence of certain pathogens involved in wood diseases. The effectiveness of these methods for the protection of grapevines remains controversial.

A new family centered on bismuth subsalicylate has been recently identified as less toxic than sodium arsenite while retaining some in vitro activity. However, these compounds are highly hydrophobic, which notably prevents these compounds from being efficiently administrated, for example used in vertical plant endotherapy.

Plant endotherapy enables plant protection products to be supplied directly to the vascular system to avoid root or cuticle barriers and to disperse the plant protection products inside the plant. This method is used to deliver plant protection products, provided the characteristics are compatible with apoplatic transport to obtain a good uptake and minimize phytotoxic effect. It has many advantages, particularly for the environment and, compared to spraying, it allows a reduction in treatment doses and limits product drift in soil, air and water.

Thus, there is still a need for new phytopharmaceutical agents, respectful of the environment, for the prevention and treatment of cryptogamic diseases, in particular wood diseases of grapevines.

Accordingly, it is an object of the present invention to provide new compositions that are non toxic to the environment and also to the operator.

Another aim of the present invention is to provide compositions that are economical viable and are efficient as phytopharmaceutical agents.

Another aim of the present invention is to provide compositions that are suitable to treat or prevent a fungal disease of a plant by efficient and thus highly sought after methods of administration, like plant endotherapy.

Thus, the present invention relates to a dispersion comprising:
(i) solid particles of a compound of following formula (I): 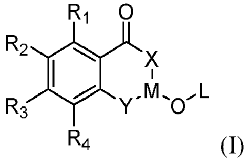 wherein :
   - R₁, R₂, R₃ and R₄ are independently chosen from H ; halogens, in particular -Cl, -Br and -F ; -OH ; -O(CO)CH₃ ; -C₁-C₆ alcoxy groups ; -C₁-C₆ alkyl groups ; -NH₂ ; and - CN;
   - X and Y are independently chosen from O, S and NR₅,
   - M is Bi, Cu or Sb,
   - L is H or a vectorization moiety comprising from 1 to 40 carbon atoms ; and
   - R₅ is at each occurrence independently chosen from H and -C₁-C₆ alkyl groups, or one of its salts;
   and
(ii) a dispersion medium constituted of or comprising:
   - a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and their mixtures;
   - a mixture of a compound A as defined above, and a compound B chosen from PEG600 to PEG20000, in particular PEG800 or PEG1000 to PEG5000, and poly(ethylene oxyde) compounds; or
   - a mixture of water, and a compound A as defined above and/or a compound B as defined above.

Surprisingly, the mean size of the active compound particles of the dispersion of the invention is less than 1500 nm. This size notably ensures a passage of the particles inside the xylem vessels of the vine (average diameter of xylem vessels being about 2µm), which are the "blood vessels" of the plant. Passage through the plant's xylem allows the active compound to be able to circulate throughout the vine and thus reach all plant pathogens present. Moreover, this small particle size increases the bioavailability of the active compound to the fungi responsible for vine diseases, which increases its effectiveness as a fungistatic compound.

By "dispersion" is in particular meant a suspension, i.e. a heterogeneous mixture in which solute particles (here solid particles of the compound of formula (I)) do not dissolve in a fluid (here a liquid called the dispersion medium), but get suspended throughout the bulk of the liquid, left floating around freely in the medium.

Advantageously, in case solid particles of compound of formula (I) sediment in the dispersion medium, said dispersion can be stirred to obtain again the dispersion with no evolution of the size of the particles of compound of formula (I).

In a particular embodiment, the solid particles have a mean size of less than 1500 nm, in particular less than 1000, 500 or 100 nm.

Typically, the solid particles may have a mean size of more than 1 nm.

By "mean size" is in particular meant average size in number. This average size in number can for example be measured using a Zetasizer Nano Series granulometer (Malvern Instruments).

In a particular embodiment, the dispersion medium is constituted of or comprises a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and their mixtures, the compound A being in particular chosen from ethylene glycol, diethylene glycol, triethylene glycol, tetraethylene glycol and PEG200 to PEG600.

In a particular embodiment, the dispersion medium is constituted of or comprises a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and a compound B chosen from PEG600 to PEG20000, in particular PEG800 or PEG1000 to PEG5000, and poly(ethylene oxyde) compounds.

In a particular embodiment, the dispersion medium is constituted of or comprises water, a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and/or a compound B chosen from PEG600 to PEG20000, in particular PEG800 or PEG1000 to PEG5000, and poly(ethylene oxyde) compounds.

In a particular embodiment, water is present in the dispersion medium to a maximum of 95% of the weight of said dispersion medium, in particular from 5 to 95% in weight, more particularly from 50 to 95%, 50 to 90%, 50 to 80%, or 50 to 70%, for example of about 50%.

In a particular embodiment, the dispersion medium is constituted of or comprises:
- a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C(=O)-CH₂=CH₂ group, and their mixtures;
- a mixture of a compound A as defined above, and a compound B chosen from PEG600 to PEG20000, in particular PEG800 or PEG1000 to PEG5000, and poly(ethylene oxyde) compounds;
- a mixture of water, and a compound A as defined above and/or a compound B as defined above, the water being present in the dispersion medium to a maximum of 85% of the weight of said dispersion medium, notably to a maximum of 80, 70 or 50% of the weight of said dispersion medium.

In a particular embodiment, the dispersion medium is constituted of or comprises:
- a compound A chosen from diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted, providing the compound A is not a PEG200 or a PEG200 to PEG350, by a -C(=O)-CH₂=CH₂ group, and their mixtures;
- a mixture of a compound A as defined above, and a compound B chosen from PEG600 to PEG20000, in particular PEG800 or PEG1000 to PEG5000, and poly(ethylene oxyde) compounds.

In a particular embodiment, the dispersion medium is constituted of or comprises:
- a compound A chosen from ethylene glycol, diethylene glycol, triethylene glycol, tetraethylene glycol, ethoxylated trimethylolpropane, and dipentaerythritol, at least one of the -OH groups of said compound A being optionally and independently substituted, by a -C(=O)-CH₂=CH₂ group, and their mixtures;
- a mixture of a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and a compound B chosen from PEG700 to PEG20000, in particular PEG800 or PEG1000 to PEG5000, and poly(ethylene oxyde) compounds.

A C₁-C₆ alkyl includes, but is not limited to, methyl, ethyl, propyl, butyl, pentyl, hexyl, isopropyl, tert-butyl, iso-butyl, sec-butyl, cyclopropyl, cyclobutyl, cyclopentyl and cyclohexyl. Preferred alkyl groups according to the invention are C₁-C₃ groups, in particular methyl, ethyl, propyl and isopropyl groups. A C₁-C₆ hydroxyalkyl group refers to a C₁-C₆, preferably C₁-C₃, alkyl group substituted by at least one hydroxyl.

A C₁-C₆ alkoxy group refers to a group R-O- where R is a C₁-C₆ alkyl group, preferably C₁-C₃. Halogen atoms include -F, -Br, -Cl and -I. Preferred halogen atoms according to the invention are -F and -Cl.

By "vectorization moiety" is in particular meant a chemical group which promotes the properties of the compound, in particular the solubility of the compound in water and/or its ability to penetrate the wood. The vectorization moiety may comprise, inter alia, a glycosyl radical and/or a hydrocarbon chain comprising from 1 to 40 carbon atoms. This hydrocarbon chain may be interrupted by one or more heteroatoms, preferably -O- or -S-, and/or by one or more of the following groups -SO₂-, -SO-, -NHC(O)-, -OC(O)-, -NH, and -NH-CO-NH-. Additionally or alternatively, said hydrocarbon chain may be substituted with one or more groups, preferably selected from -OR₅, -N(R₅)₂, -CF₃ and C₁-C₆ alkyl, monosaccharide or disaccharide. In some embodiments, the vectorization moiety is an oligo- or polyether unit, for example a polyethylene glycol, a polypropylene glycol or a polytetramethylene glycol. In some embodiments, L comprises or consists of -(CH₂-CH₂-O)ₙ-CH₂-CH₂-0H where n is an integer from 1 to 19.

In a particular embodiment, the compound of formula (I) is such as:
- R₁, R₂, R₃ and R₄ are independently chosen from the group consisting of hydrogen, halogen, preferably -Cl or -F, -OH, -O(CO)-CH₃, -OCH₃, -NH₂, -CF₃ and -CN ;
- X and Y are O;
- M is Bi or Cu, in particular Bi;
- L is H, an hydroxyl-C₁-C₆-alkyl, a glycosyl or an oligo- or polyether chain such as
- (CH₂-CH₂-O)ₙ-CH₂-CH₂-OH, wherein n is an integer from 1 to 19, in particular from 1 to 10.

In a particular embodiment, the compound of formula (I) is such as:
- R₁ and R₃ are H;
- R₂ and R₄ are independently chosen from the group consisting of -H, -Cl, -F, -OH,
- O(CO)-CH₃, -OCH₃, -NH₂ and -CN, preferably -H, -Cl or-F;
- X and Y are O;
- M is Bi or Cu, in particular Bi;
- L is H, an hydroxyl-C₁-C₆-alkyl, a glycosyl or an oligo- or polyether chain such as
- (CH₂-CH₂-O)ₙ-CH₂-CH₂-OH, wherein n is an integer from 1 to 19, in particular from 1 to 10.

In a particular embodiment, the compound of formula (I) is such as:
- R₁ and R₃ are H;
- R₂ and R₄ are independently chosen from H, -Cl and -F;
- X and Y are O;
- M is Bi or Cu, in particular Bi;
- L is H, an hydroxyl-C₁-C₆-alkyl or -(CH₂-CH₂-O)ₙ-CH₂-CH₂-OH, wherein n is an integer from 1 to 19, in particular from 1 to 10.

In a particular embodiment, the compound of formula (I) is bismuth subsalicylate (SBB) of following formula:

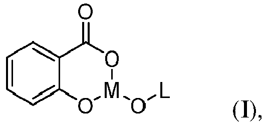

Wherein M and L are as defined above.

In particular:
- M is Bi;
- L is H, an hydroxyl-C₁-C₆-alkyl or -(CH₂-CH₂-O)ₙ-CH₂-CH₂-OH, wherein n is an integer from 1 to 19, in particular from 1 to 10.

In a particular embodiment, the compound of formula (I) is bismuth subsalicylate (SBB) of following formula:

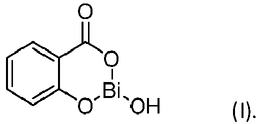

Compounds of formula (I) can for example be prepared by chemical synthesis as illustrated in Timakova et al, Chemistry for Sustainable Development, 2009, 305-313.

In a particular embodiment, the concentration of compound of formula (I) in the dispersion medium is comprised from 0.2 g/L to 150 g/L, in particular of about 10 g/L.

In another aspect, the invention also concerns a process of preparation of the dispersion as defined above, comprising a step of dispersing, in particular with a disperser, the compound of formula (I) in said dispersing medium.

The compound of formula (I) is generally, prior to the dispersion, in powder form.

In a particular embodiment, the step of dispersing is performed:
- For 2 to 30 minutes, in particular for about 10 minutes; and/or
- At a temperature comprised from 0°C to 50°C, in particular at about 20°C; and/or
- At a rotational speed, in particular with a disperser, comprised from 3000 to 25000 rpm, in particular at 12000 rpm.

In another aspect, the invention also concerns a phytopharmaceutical composition comprising:
- from 0.01% to 50% by weight of a dispersion as defined above, and
- from 50% to 99.99% by weight of one or more phytopharmaceutically acceptable excipients,
the weight percentages being expressed in relation to the total weight of the phytopharmaceutical composition.

In a particular embodiment, at least one excipient is selected from a filler, a diluent, a thickener, a carrier and a surfactant.

Preferably, the phytopharmaceutical composition according to the invention generally comprises from 0.1% to 30% by weight of a dispersion as defined above, and from 70% to 99.9% by weight of one or more excipients.

By "phytopharmaceutically acceptable excipient" is in particular meant an excipient which does not present any significant toxicity, at the dose in which it is used, to the plant, the environment and man.

The excipients that can be used in phytopharmaceutical compositions are well known to the person skilled in the art and include, among others, diluents and fillers, wetting agents, surfactants, for example ionic, amphoteric or non-ionic surfactants, dispersing agents, thickening agents, gelling agents, and agents allowing controlled release of the active ingredients, for example encapsulating or micellar agents such as phospholipids, thixotropic adjuvants, colouring agents, antioxidant agents, preservatives, stabilising agents, film-forming agents, vehicles, in particular solvents such as water and lower alcohols, oils of mineral, vegetable or animal origin, resins, waxes, rosin, latexes, gums such as gum arabic, anti-foaming agents, and adhesive agents.

In another aspect, the invention also concerns the use of the dispersion as defined above or of the phytopharmaceutical composition as defined above, for treating or preventing, in particular treating, a fungal disease of a plant.

In a particular embodiment, the fungal disease develops in a wood part of the plant.

In a particular embodiment, the fungal disease develops in the trunk, the leaves, the fruits, the root and/or the stem of the plant.

Cryptogamic diseases of the aerial parts include rot and mould diseases of the fruit or leaves such as grey rot, black rot (also known as dry rot), Macrophoma rot, downy mildew, powdery mildew, in particular powdery mildew on grapes. These diseases can involve different types of fungi.

For example, phytopathogenic fungi affecting grapevine leaves or berries include *Plasmopara viticola* (downy mildew), *Erysiphe necator* (powdery mildew), *Guignardia bidwellii* (also known as *Botryosphaeria bidwellii)* (Black rot), *Botryosphaeria. dothidea* (Macrophoma rot), and *Botrytis cinerea* (grey mould).

In some embodiments, the dispersions and compositions of the invention are used to prevent or treat a fruit and/or leaf rot or mould disease, in particular of grapevine. Preferably, said disease is associated with one or more pathogens selected from the family *Botryosphaeriaceae,* the genus *Botrytis,* in particular *Botrytis cinerea,* and parasitic oomycetes, in particular *Plasmopora viticola.* A preferred disease according to the invention is fruit rot or mould associated with a pathogen belonging to the genus *Botrytis,* in particular *Botrytis cinerea,* the treated plant preferably being a crop of agronomic interest. For example, the treated plant is the vine, or fruit trees.

In a particular aspect, the dispersions and compositions of the invention can be used to prevent or treat rot or mould in crop products. Crop products are defined as harvested or picked products, including vegetables, fruits, flowers or seeds. Fruit includes, but is not limited to, grapes, pome fruits such as apples, citrus fruits, and pears, stone fruits such as cherries, peaches, nectarines, plums, apricots, avocados, or mangoes.

Cryptogamic wood diseases include the so-called "decline" diseases such as esca, Botrysphaeria dieback, in particular Black Dead Arm, Diplodia dieback or Botryosphaeria canker, eutypiosis, anthracnose and excoriosis. These diseases are associated with one or more pathogens such as those belonging to the Botryosphaeriaceae family. Esca, eutypiosis and Black Dead Arm are the main wood diseases affecting grapevines. These diseases are, among others, described in Bertsch et al, Plant Pathology, 2013, 123.

Wood diseases are caused by different types of cryptogamic pathogens. Examples include pathogens belonging to the *Botryosphaeriaceae* family, in particular the genera *Spencermatinsia, Neofusicoccum, Botryosphaeria, Diplodia* and *Lasiodiplodia,* pathogens belonging to the genus *Eutypa, e.g. Eutypa lata,* or pathogens belonging to the genera *Phaeomoniella, Phaeoacremonium, Formitoporia, Verticillium or Phomopsis* such as *P. viticola. Phaeomoniella chlamydospora, Phaeoacremonium aleophilum (minimum), Eutypa lata, Fomitiporia mediterranea, Fomitiporia punctata, Botryosphaeria stevensii, Diplodia seriata, Neofusicoccum parvum, Stereum hirsutum* and *Verticillium longisporum* are particularly involved in grapevine wood decay diseases. For example, *Eutypa lata* is the main pathogen of *eutypiosis. Neofusicoccum parvum* is notably associated with Botryosphaeria dieback, including Black Dead Arm. Esca is generally associated with *Phaeomoniella chlamydospora, Phaeoacremonium aleophilum, and Fomitiporia mediterranea,* as well as with *Eutypa lata.*

*I*n a particular embodiment, the plant is a woody plant selected from the group consisting of fruit trees, forest trees, ornamental trees and shrubs, and horticultural trees and shrubs.

In a particular embodiment, the plant is a grapevine.

For the purposes of the invention, the term "vine" includes all species belonging to the genus *Vins,* in particular those belonging to the subgenus *Mucadinia,* such as *V. rotundifolia* or *V. munsoniana;* and those belonging to the subgenus *Euvitis,* including American species, such as *V. berlandieri, V. riparia, V. rupestris, V. cinerea or Vitis labrusca;* Asian species, such as *V*. *amurensis* and *V. coignetiae;* and the Eurasian species *V. vimfera L.,* which is the most widely cultivated species in Europe and the world.

In a particular embodiment, the fungal disease is a grapevine trunk disease.

The fungal disease of the vine can be either a wood disease, e.g. esca, a Bostryosphaeria wilt disease such as Black Dead Arm, eutypiosis, anthracnose and excoriosis, or a leaf or berry disease such as downy mildew, black rot, Macrophoma rot, or grey rot.

In a particular embodiment, the fungal disease is selected from the group consisting of esca, Eutypa dieback, Botryosphaeria dieback, black dead arm, black rot, and dead-arm disease.

In a particular embodiment, the fungal disease develops in a wood part of the plant and is associated with one or several pathogens selected from the group consisting of pathogens belonging to the family *Botryosphaeriaceae,* pathogens belonging to the genus *Eutypa,* pathogens belonging to the genus *Phaeomoniella,* pathogens belonging to the genus *Phaeoacremonium,* pathogens belonging to the genus *Formitoporia,* pathogens belonging to the genus *Verticillium,* pathogens belonging to the genus *Stereum,* pathogens belonging to the genus *Phomopsis,* and pathogens belonging to the genus *Diplodia.*

In a particular embodiment, the one or several pathogens comprise a pathogenic fungus selected from the group consisting of pathogens belonging to the genus *Eutypa,* for example *Eutypa lata,* pathogens belonging to the genus *Diplodia,* for example *Diplodia seriata,* pathogens belonging to the genus *Phaeomoniella,* for example *Phaeomoniella chlamydospora,* and pathogens belonging to the genus *Phaeoacremonium,* for example *Phaeoacremonium minimum* or *Phaeoacremonium aleophilum,* pathogens belonging to the genus *Fomitiporia,* for example *Fomitiporia mediterranea,* pathogens belonging to the genus *Botryopshaeria,* for example *Botryospaheria stevensii,* pathogens belonging to the genus *Neofusicoccum,* for example *Neofusicoccum parvum,* pathogens belonging to the genus *Stereum,* for example *Stereum hirsutum,* pathogens belonging to the genus *Verticillium,* for example *Verticillium longisporum.*

In a particular embodiment, the one or several pathogens comprise a pathogenic fungus selected from the group consisting of *Phaeomoniella chlamydospora, Phaeoacremonium minimum, Eutypa lata, Fomitiporia mediterranea, Fomitiporia punctata, Botryosphaeria stevensii, Diplodia seriata, Neofusicoccum parvum, Stereum hirsutum* and *Verticillium longisporum.*

In a particular embodiment, the fungal disease is a wood necrosis associated with a pathogen from the *Botryosphaeriaceae* family, , notably genus *Neofusicoccum,* in particular *Neofusicoccum parvum;* or genus *Fomitiporia,* in particular *Fomitiporia mediterranea.*

In a particular embodiment, the fungal disease is an infection of pruning wounds.

In another aspect, the invention also concerns a method for treating or preventing, in particular treating, a fungal disease of a plant, said method comprising administrating the dispersion as defined above or the phytopharmaceutical composition as defined above by injection into the plant, in particular into the wood of the plant.

In a particular embodiment, the dispersion is administered to the plant during vegetative period.

In a particular embodiment, the plant suffers from wood necrosis and the dispersion is administered inside the wood necrosis.

In a particular embodiment, said method is plant endotherapy, in particular vertical vegetal endotherapy.

Plant endotherapy is for example used in fruit tree cultivation and in urban landscape trees. It has many advantages, particularly in terms of the environment as, compared to spraying, it allows a low input as for treatment doses and limits product drift in soil, air and water.

This technique of plant endotherapy consists generally of drilling and injecting chemicals compounds or beneficial microorganisms directly into the plant, in particular into the trunk.

The treatment product is typically injected into the vascular tissue, allowing precise application and rapid diffusion into the plant tissue.

It has many advantages, particularly for the environment. Indeed, compared to a conventional spray, this technique allows a reduction in treatment doses and limits product drift into the soil, air and water, thus reducing the impact on non-target organisms. This targeted technique also limits the risks for the operator. In a typical vertical plant endotherapy administration method: the vine is drilled with a wood drill in the height, starting from the head of the stump. Then the treatment is injected with a syringe inside the hole.

### Definitions

The following terms and expressions contained herein are defined as follows:
As used in this description, the term "about" refers to a range of values of ± 10% of a specific value. For example, the expression "approximately 100 µm" includes values of 100 µm ± 10%, i.e. values from 90 µm to 110 µm.

As used herein, a range of values in the form "x-y" or "x to y", or "x through y", include integers x, y, and the integers therebetween. For example, the phrases "1-6", or "1 to 6" or "1 through 6" are intended to include the integers 1, 2, 3, 4, 5, and 6. Preferred embodiments include each individual integer in the range, as well as any subcombination of integers. For example, preferred integers for "1-6" can include 1, 2, 3, 4, 5, 6, 1-2, 1-3, 1-4, 1-5, 2-3, 2-4, 2-5, 2-6, etc.

The term "(C₁-C₆)alkyl", as used in the present invention, refers in particular to a straight or branched saturated hydrocarbon chain containing from 1 to 6 carbon atoms including, but not limited to, methyl, ethyl, n-propyl, iso-propyl, n-butyl, iso-butyl, sec-butyl, t-butyl, n-pentyl, n-hexyl, and the like.

The term "C₁-C₆ alcoxy", as used in the present invention, refers in particular to a -O-(C₁-C₆)alkyl, the (C₁-C₆)alkyl group being as defined above.

### FIGURES

**Figure 1** corresponds to a study of the mycelial growth of *Neofusicoccum parvum* Np-Bt67 strain on different supplemented culture media according to example 2.
**Figure 2** corresponds to a study of the mycelial growth *of N. parvum* Np Bourgogne strain on different supplemented culture media according to example 2.

### EXAMPLES

### Example 1: Preparation of dispersions of the invention

Bismuth subsalicylate was suspended in a medium as indicated in the table below at a concentration of 10 g/L and stirred at room temperature for 10 minutes at 12000 rpm with Ultra-turrax.

The mean size of the particles of the obtained dispersion was measured at 20°C using a Zetasizer Nano Series granulometer (Malvern Instruments), in particular by manual measurements, and notably by diluting a drop (about 25 µL) of dispersion in about 1 mL of the medium of said dispersion, of compound A, of compound B and/or of water directly in the plastic measurement cell. For each analysis, three measurements on three samples were performed (9 values in total). The mean size of particle are collected in the table below.

Two references being not part of the invention (water + BSS and DMSO/water + BSS) were also considered.

| **Sample** | **Average particle diameter (nm)** |
|---|---|
| **Water + BSS 10 g/L** | 11070 nm (±7618 nm) |
| **DMSO/water 10/90 (vol%) + BSS 10g/L** | 1632 nm (±924 nm) |
| **PEG 200 + BSS 10 g/L** | 345 nm (±201 nm) |
| **PEG 200 / water 50/50 (wt%) + BSS 10 g/L** | 839 nm (±805 nm) |
| **PEG 200 / water 30/70 (wt%) + BSS 10 g/L** | 841 nm (±461 nm) |
| **PEG 200 / water 20/80 (wt%) + BSS 10 g/L** | 830 nm (±568 nm) |
| **PEG 200 / water 5/95 (wt%) + BSS 10 g/L** | 1183 nm (±168 nm) |
| **PEG 200 / PEG 600 60/40 (wt%) + BSS 10 g/L** | 210 nm (±110 nm) |
| **PEG 200 / PEG 1000 95/5 (wt%) + BSS 10 g/L** | 14 nm (±1 nm) |
| **PEG 200 / PEG 1000 90/10 (wt%) + BSS 10 g/L** | 263 nm (±148 nm) |
| **PEG 200 / PEG 1000 85/15 (wt%) + BSS 10 g/L** | 149 nm (±123 nm) |
| **PEG 200 / PEG 2050 90/10 (wt%) + BSS 10 g/L** | 16 nm (±20 nm) |
| **PEG 400 + BSS 10g/L** | 442 nm (±152 nm) |
| **Ethylene glycol + BSS 10 g/L** | 634 nm (±416 nm) |
| **Triethylene glycol + BSS 10 g/L** | 115 nm (±116 nm) |
| **Tetraethylene glycol dimethyl ether + BSS 10 g/L** | 1238 nm (±123 nm) |
| **PEG 200 diacrylate + BSS 10 g/L** | 818 nm (±356 nm) |
| **PEG 400 diacrylate + BSS 10 g/L** | 403 nm (±38 nm) |
| **PEG 600 diacrylate + BSS 10 g/L** | 199 nm (±134nm) |
| **Ethoxylated trimethylolpropane triacrylate + BSS 10 g/L** | 70 nm (±60 nm) |
| **Propoxylated glycerol triacrylate + BSS 10 g/L** | 260 nm (±200 nm) |
| **Dipentaerythritol pentaacrylate + BSS 10 g/L** | 4 nm (±1 nm) |

### Example 2: In vitro biocidal activity evaluation of dispersions of the invention

### Study of the mycelial growth of Neofusicoccum parvum Np-Bt67 strain on different supplemented culture media

### Protocol:

The fungus *N. parvum* Np-Bt67 is grown on Potato Dextrose Agar (PDA 20 g/1) solid medium (PDA control), or PDA supplemented with:
- BSS suspended in water at 10g/L (reference being not part of the invention);
- BSS suspended in DMSO at 10g/L (reference being not part of the invention);
- A dispersion of BSS in PEG 200 at 10g/L (invention).

A 7 mm diameter circular plug of 10 days old mycelium was sterilely placed in the center of each Petri dish. The Petri dishes were then incubated at 25°C in the dark and mycelium growth (in mm) was evaluated every 24 hours. Three technical and biological replicates were carried out in this test.

### Results:

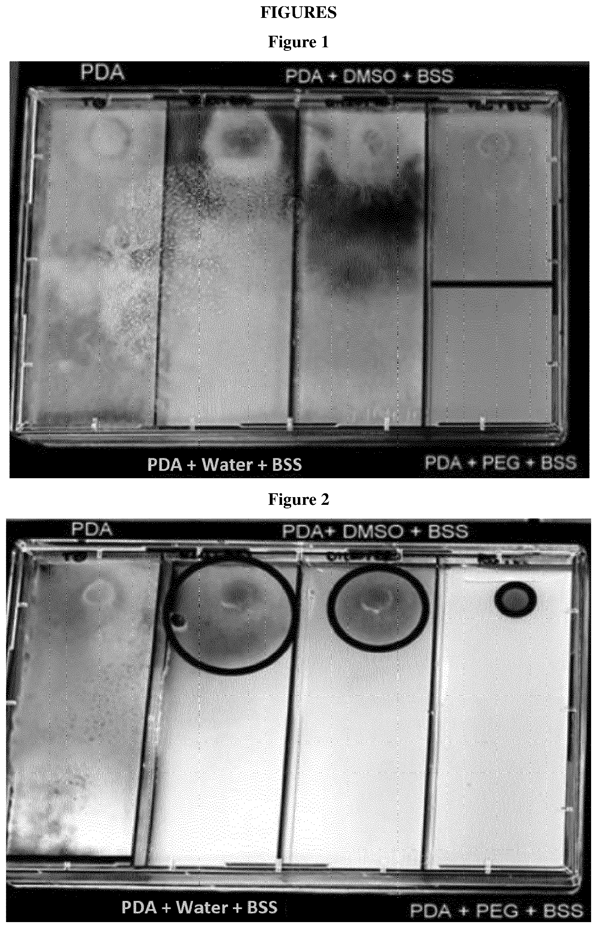

Figure 1 shows the results. after 9 days. Results are very similar at 16 days.

In comparison to references being not part of the invention, the dispersion of the invention significantly inhibits mycelial growth.

### Study of the mycelial growth of N. parvum Np Bourgogne strain on different supplemented culture media

### Protocol:

Analogous to the protocol described above

### Results:

Figure 2 shows the results. After 16 days.

In comparison to references being not part of the invention, the dispersion of the invention significantly inhibits mycelial growth.

### Example 3: Open field plant endotherapy studies

The study of dispersions of the invention was carried out according to the following schedule.

### Year n-1:

- Marking of vines symptomatic of Grapevine Trunk Diseases, GTDs (slow form) and counting of vines dead from GTDs (apoplectic form);
- Computation of the GTDs / plot ratio (slow form and apoplectic form);
- Vines with slow form are treated in year n.

### Year n:

- Drilling and treatments of the vines marked for slow form GTDs;
- Drilling (about 5 minutes by vine) is done from top to bottom following the architecture of the vine as much as possible. Drilling diameter = 8 to 16 mm. Maximum drilling length = 45-50 cm;
- Treatment (about 2 minutes by vine) of the drilled vine until the tinder is saturated with product. Volume of injected treatment varies from one vine to another (8 to 200 ml) depending on the white rot ("amadou") content. Treatment is protected from leaching because the hole where the product is injected is plugged after each treatment;
- 3 treatments by year. 1st at dormancy stage (mid-end of February). 2nd between stages 57 and 61 (before flowering mid to late May). 3rd before veraison;
- Weekly monitoring of the plots (evaluation of the evolution of the development stages / vine, health status of plots monitored each year) with recording of the phenological stages and diseases (GTDs (eutypiosis + Esca/BDA) and other diseases (oïdium, mildew, *Botrytis,* excoriosis, etc.));
- weekly monitoring of treated vines for GTDs monitoring with scoring per vine from 0 to 10 (10 being apoplectic = death of the vine) and per branch on the vine from 0 to 1 (if slow form, the percentage of leaves affected by GTDs is noted; if apoplectic form, the vine is noted as dead and therefore not retreated after
- Marking of ill vines and referencing of vines dead by GTDs;
- Computation of the annual GTDs (before harvest) / plot and / vine ratios (slow form and apoplectic form).

### Subsequent years (for example 3 years at least):

- Same points as year n are performed (except of drilling);
- Annual GTDs / plot ratio (slow form and apoplectic form) are established;
- Notion of resilience of the GTDs / plot and / vine.

## Claims

1. A dispersion comprising:
(i) solid particles of a compound of following formula (I): 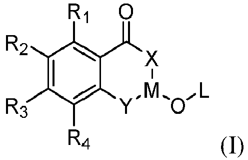 wherein :
- R₁, R₂, R₃ and R₄ are independently chosen from H ; halogens, in particular -Cl, -Br and -F ; -OH ; -O(CO)CH₃ ; -C₁-C₆ alcoxy groups ; -C₁-C₆ alkyl groups ; -NH₂ ; and - CN;
- X and Y are independently chosen from O, S and NR₅,
- M is Bi, Cu or Sb,
- L is H or a vectorization moiety comprising from 1 to 40 carbon atoms ; and
- R₅ is at each occurrence independently chosen from H and -C₁-C₆ alkyl groups, or one of its salts;
and
(ii) a dispersion medium constituted of or comprising:
- a compound A chosen from ethylene glycol, diethylene glycol, triethylene glycol, tetraethylene glycol, PEG200 to PEG600, ethoxylated trimethylolpropane, propoxylated glycerol, and dipentaerythritol, at least one of the -OH groups of said compound A being optionally and independently substituted by a -C₁-C₆ alkyl group, in particular Me, or a -C(=O)-CH₂=CH₂ group, and their mixtures;
- a mixture of a compound A as defined above, and a compound B chosen from PEG600 to PEG20000, in particular PEG800 or PEG1000 to PEG5000, and poly(ethylene oxyde) compounds; or
- a mixture of water, and a compound A as defined above and/or a compound B as defined above.

2. The dispersion according to claim 1, wherein the solid particles have a mean size of less than 1500 nm, in particular less than 1000, 500 or 100 nm.

3. The dispersion according to claim 1 or 2, wherein the water is present in the dispersion medium to a maximum of 95% of the weight of said dispersion medium, in particular from 5 to 95% in weight, more particularly from 50 to 95%, 50 to 90%, 50 to 80%, or 50 to 70%, for example of about 50%.

4. The dispersion according to anyone of claims 1 to 3, wherein the compound of formula (I) is such as:
- R₁ and R₃ are H;
- R₂ and R₄ are independently chosen from H, -Cl and -F;
- X and Y are O;
- M is Bi or Cu, in particular Bi;
- L is H, an hydroxyl-C₁-C₆-alkyl or -(CH₂-CH₂-O)ₙ-CH₂-CH₂-OH, wherein n is an integer from 1 to 19, in particular from 1 to 10;
the compound of formula (I) being more particularly bismuth subsalicylate (SBB) of following formula:

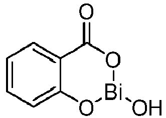

5. The dispersion according to anyone of claims 1 to 4, wherein the concentration of compound of formula (I) in the dispersion medium is comprised from 0.2 g/L to 150 g/L, in particular of about 10 g/L.

6. A process of preparation of the dispersion according to anyone of claims 1 to 5, comprising a step of dispersing, in particular with a disperser, the compound of formula (I) in said dispersing medium.

7. The process according to claim 6, wherein the step of dispersing is performed:
- For 2 to 30 minutes, in particular for about 10 minutes; and/or
- At a temperature comprised from 0°C to 50°C, in particular at about 20°C; and/or
- At a rotational speed, in particular with a disperser, comprised from 3000 to 25000 rpm, in particular at 12000 rpm.

8. A phytopharmaceutical composition comprising:
- from 0.01% to 50% by weight of a dispersion as defined in anyone of claims 1 to 5, and
- from 50% to 99.99% by weight of one or more phytopharmaceutically acceptable excipients,
the weight percentages being expressed in relation to the total weight of the composition of a compound of formula (I).

9. Use of the dispersion according to anyone of claims 1 to 5 or of the phytopharmaceutical composition according to claim 8, for treating a fungal disease of a plant.

10. The use according to claim 9, wherein the fungal disease develops in the trunk, the leaves, the fruits, the root and/or the stem of the plant.

11. The use according to anyone of claims 9 to 10, wherein the plant is a woody plant selected from the group consisting of fruit trees, forest trees, ornamental trees and shrubs, and horticultural trees and shrubs, the plant being in particular a grapevine.

12. The use according to anyone of claims 9 to 11, wherein the fungal disease is selected from the group consisting of esca, Eutypa dieback, Botryosphaeria dieback, black dead arm, black rot, and dead-arm disease.

13. The use according to anyone of claims 9 to 12, wherein the fungal disease develops in a wood part of the plant and is associated with one or several pathogens selected from the group consisting of pathogens belonging to the family *Botryosphaeriaceae,* pathogens belonging to the genus *Eutypa,* pathogens belonging to the genus *Phaeomoniella,* pathogens belonging to the genus *Phaeoacremonium,* pathogens belonging to the genus *Formitoporia,* pathogens belonging to the genus *Verticillium,* pathogens belonging to the genus *Stereum* and pathogens belonging to the genus *Phomopsis,*
the one or several pathogens being in particular a pathogenic fungus selected from the group consisting of *Phaeomoniella chlamydospora, Phaeoacremonium minimum, Eutypa lata, Fomitiporia mediterranea, Fomitiporia punctata, Botryosphaeria stevensii, Diplodia seriata, Neofusicoccum parvum, Stereum hirsutum* and *Verticillium longisporum.*

14. A method for treating a fungal disease of a plant, said method comprising administrating the dispersion according to anyone of claims 1 to 5 or the phytopharmaceutical composition according to claim 8 by injection into the plant, in particular into the wood of the plant, more particularly by plant endotherapy.

15. The method according to claim 14, wherein the dispersion is administered to the plant during vegetative period.
